# EUROPEAN PATENT SPECIFICATION

(11) **EP 0 870 745 B1**
(45) Date of publication and mention of the grant of the patent: **10.03.2004**
(21) Application number: 98106614.5
(22) Date of filing: 09.04.1998
(51) Int. Cl.: C05F 9/04, C05F 17/02, A41D 13/00, A41D 19/00, D21H 11/12, A41D 1/00

(54) **Method for disposing vegetable-organic refuse**
Verfahren zur Entsorgung von organischen pflanzlichen Abfällen
Méthode pour la transformation des déchets v gétales organiques

(30) Priority: 11.04.1997 IT MN970014 U
(43) Date of publication of application: 14.10.1998
(73) Proprietor: Paccini, Paola, 46010 Marcaria (IT)
(72) Inventor: Paccini, Paola, 46010 Marcaria (IT)
(74) Representative: Jorio, Paolo

(56) References cited:
- EP-A- 0 565 920
- WO-A-94/04745
- WO-A-96/40561
- US-A- 3 934 999
- US-A- 5 117 981

## Description

The present invention relates to a method for transforming vegetable-organic refuse into soil conditioner.

As is known, environmental protection is now a major concern, especially as regards the disposal of solid urban refuse, and in particular vegetable-organic refuse such as leaves, grass, branches, coffee, vegetable waste, etc.

Numerous directives, even at Community level, have recently been issued encouraging alternative pollutionfree solutions and methods to the current dumping system.

At present, in fact, vegetable matter and damp domestic waste is simply dumped, which poses serious problems.

A first of these is the high cost, inevitably reflected in local administration expenses, of transporting such refuse to the dump. Another is posed by current regulations requiring local councils, by 1998-2000, to recycle at least 35% of the refuse collected, with special emphasis on vegetable-organic refuse which is easier to recycle. In many towns, the dumping of leaves and grass, tree and hedge cuttings has already been prohibited.

A demand therefore exists for some way of transforming such refuse to solve the dumping problem while at the same time obtaining substances which may be used, for example, as humus.

As all organic matter undergoes decomposition, this characteristic is exploited the natural way to produce humus for plants and gardens.

Converting organic matter into humus, however, demands specific conditions in terms of temperature, humidity, aeration and quantity of material.

The household method of recycling and converting such refuse substantially consists, at present, in forming a heap in a corner of the garden and waiting for it to be converted into soil conditioner in the natural course.

The above system obviously has the advantage of being costfree. On the other hand, however, the heap is bulky and unsightly, and conversion takes an extremely long time for lack of the ideal conditions required.

One way of solving the unsightliness of the above method is to accumulate the refuse under a metal or plastic dome. This, however, gives rise to several additional drawbacks.

First of these is the stench caused by the dome preventing proper ventilation of the heap. Second is the fairly long time still required for conversion to take place and so reduce the size of the heap, so that the dome is quickly clogged, particularly in spring and summer when mowing and pruning are more frequent.

Last but not least is the expense of the dome, which occupies a permanent place even when not used. The method described in US-A-3 934 999 does not solve the aforementioned drawbacks.

It is an object of the present invention to substantially solve the aforementioned problems by means of a method for transforming vegetable-organic refuse.

It is a further object of the present invention to provide a package to carry out such a method by which vegetable-organic refuse may be transformed easily, rapidly and in a natural pollutionfree manner.

Yet a further object of the present invention is to provide a package comprising a container which may be kept safely in the home, and which may be used in any garden.

Last but not least, it is an object of the present invention to provide a package that is practical, extremely safe, and cheap and easy to produce.

According to the present invention, there is provided a method for disposing vegetable-organic refuse as claimed in claim 1 and a package to carry out said method.

A non-limiting embodiment of the present invention will be described by way of example with reference to the accompanying drawings, in which:
Figure 1 shows the component parts of the package according to the invention;
Figure 2 shows one component of the package in use.

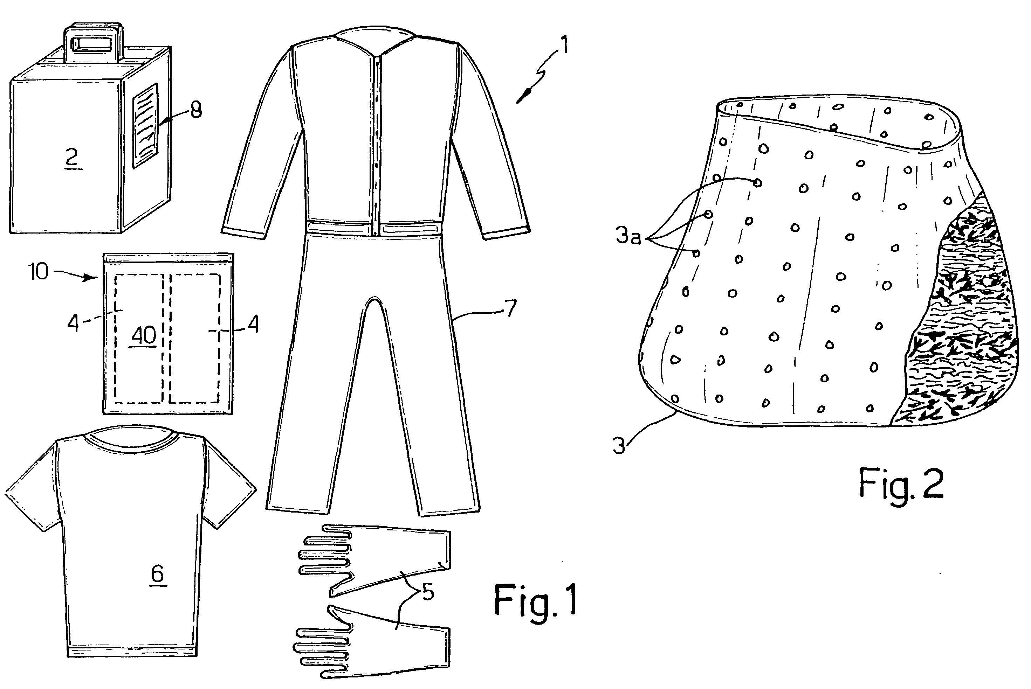

Number 1 in Figure 1 indicates as a whole a package for transforming vegetable-organic refuse in accordance with the present invention.

Package 1 contains everything required to transform leaves, grass, broken-up branches and cuttings, plain paper, coffee, vegetable waste and other matter into soil conditioner.

Package 1 comprises a substantially parallelepiped container 2 made of biodegradable material and containing the necessary equipment. More specifically, the container is made of cardboard, or recycled paper, or paper formed by synthesizing seaweed.

In the embodiment shown, package 1 contains at least one bag 3 made of strong plastic material for repeated use.

More specifically, the package contains two bags made of polyvinyl chloride, and having a number of holes 3a for effectively aerating the refuse inside.

Package 1 comprises at least one pack 4 of a bacterial inoculating agent.

According to the present invention, the package contains a number of packs 4 of bacterial inoculating agent inside an airtight container 40.

Package 1 also comprises a pair of latex gloves 5, a T-shirt 6 and/or rainproof suit 7, and instructions for use 8.

Package 1 also comprises a backup package 10 containing one or more packs 4 of bacterial inoculating agent and/or gloves 5.

The present invention, as described above, is used as follows.

After opening container 2, the user puts on gloves 5 and places bag 3 anywhere in the garden where it can be filled and left for a given length of time.

As shown in Figure 2, a first layer of about 15-20 cm of broken-up branches or hedge cuttings is formed in bag 3 to ensure a fair amount of material and sufficient ventilation, and is followed by a second 15-20 cm layer of grass, vegetable garden and kitchen waste.

At this point, water and the contents of one pack 4 of bacterial inoculating agent are added, and the above layers are repeated until bag 3 is full.

To improve reaction, the contents of the bag must be shaken occasionally to improve ventilation and accelerate transformation, which takes about 30-90 days.

By that time, the refuse has been transformed and bag 3 contains a given amount of mature soil conditioner ready for use. Once emptied, bag 3 may be used again.

The aims of the present invention are therefore fully achieved.

That is, the package according to the invention is extremely practical and compact, and provides for producing soil conditioner for garden plants, trees, bushes, lawns and potted plants. The substance obtained is an excellent fertilizer and, combined with dead leaves and twigs, protects plants from extreme heat or cold and from rain-induced erosion, while at the same time retaining humidity during particularly dry spells.

The bags are of reasonable size, and can be carried easily and used again.

The specially prepared bacterial inoculating agent greatly reduces transformation time as compared with the known method, while at the same time providing for excellent results in terms of quality.

Moreover, the package contains everything the user needs, unlike the known method in which any items not already available must be procured.

Clearly, changes may be made to the present invention as described and illustrated herein without, however, departing from the scope of the accompanying Claims.

## Claims

1. A method for disposing vegetable-organic refuse, **characterized by** comprising the steps of
(a) providing a package (1) comprising at least one bag (3) having a number of ventilation holes (3a), at least one pack (4) containing a bacterial inoculating agent and at least one pair of gloves (5), all contained in a substantially parallelepiped container (2) made of biodegradable material;
(b) opening said package (1) and filling said bag (3) with a first layer of broken-up branches or hedge cuttings to ensure a fair amount of material and sufficient ventilation, followed by a second layer of grass, vegetable garden and kitchen waste; said layers being of 15-20 cm in height;
(c) adding water and the contents of said pack (4) of bacterial inoculating agent, and repeating the above layers until said bag (3) is full;
(d) leaving the filled bag (3) anywhere in the opening for a period until said vegetable organic refuse, together with said kitchen waste are transformed into a soil conditioner;
(e) shaking occasionally the bag (3) during said period to improve ventilation and accelerate transformation.

2. A method as claimed in Claim 1, **characterized in that** said bag (3) is placed anywhere in a garden where it can be filled and left, after having been filled, for said period, said period being of about 30-90 days.

3. A method as claimed in anyone of the foregoing Claims, **characterized in that** after opening said container (2), the user puts on said gloves (5) before placing and filling said bag (3).

4. A method as claimed in anyone of the foregoing Claims, **characterized in that** said container (2) is made of recycled paper or paper formed by synthesizing seaweed.

5. A method as claimed in Claim 1, **characterized in that** said package (1) includes also a T-shirt (6).

6. A method as claimed in Claim 1, **characterized in that** said package (1) includes also a rainproof suit (7).

7. A method as claimed in Claim 1, **characterized in that** said package (1) includes at least two bags (3) made of plastic material.

8. A method as claimed in Claim 1, **characterized in that** said package (1) includes a number of packs (4) of bacterial inoculating agent.

9. A method as claimed in Claim 8, **characterized in that** said number of packs (4) of bacterial inoculating agent are housed in an airtight container (40).

10. Use of a package kit (1) comprising a substantially parallelepiped container (2) made of biodegradable material and containing at least one bag (3) provided with a number of ventilation holes (3a), at least one pack (4) containing a bacterial inoculating agent and at least one pair of gloves (5) to carry out the method of Claim 1 for disposing vegetable-organic refuse.

## Patentansprüche

1. Verfahren zum Entsorgen von organischem pflanzlichem Abfall, **gekennzeichnet durch** die folgenden Schritte:
(a) Vorsehen einer Packung (1) mit zumindest einem Beutel (3) mit einer Anzahl von Belüftungsöffnungen (3a), zumindest einem Päckchen (4) mit einem bakteriellen Impfmittel und zumindest einem Paar von Handschuhen (5), alles vorhanden in einem im Wesentlichen quaderförmigen Behälter (2) aus einem biologisch abbaubaren Material;
(b) Öffnen der Packung (1) und Befüllen des Beutels (3) mit einer ersten Schicht aus zerkleinerten Zweigen oder zerkleinertem Heckenschnitt, um eine ausreichende Menge an Material und ausreichende Belüftung sicherzustellen, gefolgt von eine zweiter Schicht aus Gras, pflanzlichen Garten- und Küchenabfällen, wobei diese Schichten eine Höhe von 15 bis 20 cm haben;
(c) Hinzufügen von Wasser und den Inhalten des Päckchens (4) mit dem bakteriellen Impfmittel und Wiederholen der oberen Schichten, bis der Beutel (3) voll ist;
(d) Belassen des befüllten Beutels (3) für einen bestimmten Zeitraum irgendwo im Freien, bis sich der organische pflanzliche Abfall zusammen mit dem Küchenabfall in einen Bodenverbesserer umgewandelt hat; und
(e) Schütteln des Beutels (3) von Zeit zu Zeit während dieses Zeitraums, um die Belüftung zu verbessern und die Umwandlung zu beschleunigen.

2. Verfahren nach Anspruch 1, **dadurch gekennzeichnet, dass** der Beutel (3) irgendwo in einem Garten platziert wird, wo er befüllt und für den bestimmten Zeitraum belassen werden kann, nachdem er befüllt worden ist, wobei dieser Zeitraum ungefähr 30 bis 90 Tage beträgt.

3. Verfahren nach einem der vorangehenden Ansprüche, **dadurch gekennzeichnet, dass** der Benutzer nach dem Öffnen des Behälters (2) die Handschuhe (5) anzieht, bevor er den Beutel (3) platziert und befüllt.

4. Verfahren nach einem der vorangehenden Ansprüche, **dadurch gekennzeichnet, dass** dder Behälter (2) aus recyceltem Papier besteht oder aus Papier, das durch Synthetisieren von Seegras gebildet worden ist.

5. Verfahren nach Anspruch 1, **dadurch gekennzeichnet, dass** die Packung (1) auch ein T-Shirt (6) beinhaltet.

6. Verfahren nach Anspruch 1, **dadurch gekennzeichnet, dass** die Packung (1) auch einen regendichten Anzug (7) beinhaltet.

7. Verfahren nach Anspruch 1, **dadurch gekennzeichnet, dass** die Packung (1) zumindest zwei Beutel (3) aus Plastikmaterial beinhalten.

8. Verfahren nach Anspruch 1, **dadurch gekennzeichnet, dass** die Packung (1) mehrere Päckchen (4) mit dem antibakteriellen Impfmittel beinhaltet.

9. Verfahren nach Anspruch 8, **dadurch gekennzeichnet, dass** die Päckchen (4) mit dem bakteriellen Impfmittel in einem luftdichten Behälter (40) vorgesehen sind.

10. Verwendung einer Packungsausrüstung (1) mit einem im Wesentlichen quaderförmigen Behälter (2) aus einem biologisch abbaubaren Material, der zumindest einen Beutel (3) beinhaltet, der mit einer Anzahl von Belüftungsöffnungen (3a) versehen ist, zumindest ein Päckchen (4) mit einem bakteriellen Impfmittel und zumindest ein Paar von Handschuhen (5), zur Ausführung des Verfahrens zum Entsorgen von organischem pflanzlichem Abfall gemäß dem Anspruch 1.

## Revendications

1. Procédé pour éliminer des rebuts organiques végétaux, **caractérisé en ce qu'**il comprend les étapes consistant à :
(a) disposer d'un emballage (1) comprenant au moins un sac (3) ayant un certain nombre de trous de ventilation (3a), au moins un paquet (4) contenant un agent d'inoculation bactérien et au moins une paire de gants (5), tous contenus dans un récipient sensiblement parallélépipédique (2) fait d'un matériau biodégradable ;
(b) ouvrir ledit emballage (1) et remplir ledit sac (3) avec une première couche de branches cassées ou de découpes de haie pour assurer une bonne quantité de matériau et une ventilation suffisante, puis une deuxième couche d'herbe, de gazon et de déchets domestiques ; lesdites couches ayant une hauteur de 15-20 cm ;
(c) ajouter de l'eau et le contenu dudit paquet (4) d'agent d'inoculation bactérien, et répéter les couches ci-dessus jusqu'à ce que ledit sac (3) soit plein ;
(d) laisser le sac (3) rempli n'importe où à l'extérieur pendant une certaine période jusqu'à ce que lesdits rebuts organiques végétaux, conjointement avec lesdits déchets domestiques, soient transformés en un agent d'amendement du sol ;
(e) secouer occasionnellement le sac (3) durant ladite période pour améliorer la ventilation et accélérer la transformation.

2. Procédé selon la revendication 1, **caractérisé en ce que** ledit sac (3) est placé n'importe où dans un jardin où il peut être rempli et laissé, après avoir été rempli, pendant ladite période, ladite période étant d'environ 30 à 90 jours.

3. Procédé selon l'une quelconque des revendications précédentes, **caractérisé en ce qu'**après l'ouverture dudit récipient (2), l'utilisateur met lesdits gants (5) avant de placer et remplir ledit sac (3).

4. Procédé selon l'une quelconque des revendications précédentes, **caractérisé en ce que** ledit récipient (2) est fait de papier recyclé ou de papier formé par synthèse à base d'algues.

5. Procédé selon la revendication 1, **caractérisé en ce que** ledit emballage (1) comprend aussi un tee-shirt (6).

6. Procédé selon la revendication 1, **caractérisé en ce que** ledit emballage (1) comprend aussi un imperméable (7).

7. Procédé selon la revendication 1, **caractérisé en ce que** ledit emballage (1) comprend au moins deux sacs (3) faits de matière plastique.

8. Procédé selon la revendication 1, **caractérisé en ce que** ledit emballage (1) comprend un certain nombre de paquets (4) d'agent d'inoculation bactérien.

9. Procédé selon la revendication 8, **caractérisé en ce que** ledit certain nombre de paquets (4) d'agent d'inoculation bactérien est logé dans un récipient étanche à l'air (40).

10. Utilisation d'un kit d'emballage (1) comprenant un récipient sensiblement parallélépipédique (2) fait d'un matériau biodégradable et contenant au moins un sac (3) pourvu d'un certain nombre de trous de ventilation (3a), au moins un paquet (4) contenant un agent d'inoculation bactérien et au moins une paire de gants (5) pour la mise en oeuvre du procédé de la revendication 1 pour éliminer des rebuts organiques végétaux.
